# EUROPEAN PATENT APPLICATION

(11) **EP 3 101 608 A1**
(43) Date of publication of application: **07.12.2016**
(21) Application number: 16000384.4
(22) Date of filing: 16.02.2016
(51) Int. Cl.: G06Q 20/32, G06Q 20/36, G06Q 20/40

(54) **MOBILE TERMINAL AND CONTROLLING METHOD THEREOF**

(30) Priority: 04.06.2015 KR 20150079273
(71) Applicant: LG Electronics Inc., Seoul 07336 (KR)
(72) Inventor: CHOI, Younhwa, 06772 Seoul (KR); PARK, Sungjin, 06772 Seoul (KR); GIL, Byungchul, 06772 Seoul (KR)
(74) Representative: Beyer, Andreas

(57) **Abstract**

A mobile terminal including a memory configured to store card information; a wireless communication unit configured to communicate with a payment terminal; a display having at least one side curved to be divided into a front part and an edge part; and a controller configured to in response to the payment terminal being detected, display a first card object on the edge part of the display, and transmit card information of a card associated with the first card object to the payment terminal in response to a touch input of the first card object.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for making a payment using a card registered at the mobile terminal.

### Discussion of the Related Art

Terminals may be generally classified as mobile/portable terminals or stationary terminals. Mobile terminals may also be classified as handheld terminals or vehicle mounted terminals. A function of a mobile terminal is diversifying. For instance, the function of the mobile terminal may include data and audio communication, picture and video capturing via a camera, voice recording, playing a music file via a speaker system and outputting an image or a video on a display unit. Some terminals perform a function of an electronic game or a function of a multimedia player. In particular, a latest mobile terminal can receive a multicast signal providing visual contents such as a broadcast, a video and a television program.

As a function of a terminal is diversified, the terminal is implemented in a multimedia player form equipped with complex functions including capturing a picture or a video, playing music or a video file, gaming, receiving a broadcast and the like for example. Owing to the recent development of the finance technology, an applicable scope of a mobile terminal is extending to a payment field. For instance, if a mobile card is issued to a mobile terminal, goods can be purchased by approaching the mobile card issued mobile terminal to an NFC payment terminal only. However, the payment process is often cumbersome for the user.

### SUMMARY OF THE INVENTION

Accordingly, embodiments of the present invention are directed to a mobile terminal and controlling method thereof that substantially obviate one or more problems due to limitations and disadvantages of the related art.

Another object of the present invention is to provide a mobile terminal and controlling method thereof, by which a user's convenience can be enhanced.

Yet another object of the present invention is to provide a mobile terminal and controlling method thereof, by which a payment can be conveniently made using a card registered at the mobile terminal.

Another object of the present invention is to provide a mobile terminal and controlling method thereof, by which a security risk possibly generated from making a card payment can be minimized through user authentication.

To achieve these objects and other advantages and in accordance with the purpose of the invention, as embodied and broadly described herein, as embodied and broadly described herein, the present invention provides a mobile terminal including a memory configured to store card information; a wireless communication unit configured to communicate with a payment terminal; a display having at least one side curved to be divided into a front part and an edge part; and a controller configured to in response to the payment terminal being detected, display a first card object on the edge part of the display, and transmit card information of a card associated with the first card object to the payment terminal in response to a touch input of the first card object. The present invention also provides a corresponding method of controlling a mobile terminal.

Effects obtainable from the present invention may be non-limited by the above mentioned effect. And, other unmentioned effects can be clearly understood from the following description by those having ordinary skill in the technical field to which the present invention pertains. It is to be understood that both the foregoing general description and the following detailed description of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal according to an embodiment of the present disclosure;
FIGS. 1B and 1C are conceptual views of one example of the mobile terminal, viewed from different directions;
FIG. 2 is a conceptual view of a deformable mobile terminal according to an alternative embodiment of the present disclosure;
FIG. 3 is a diagram illustrating one example of the concept for a mobile terminal to communicate with a payment terminal;
FIG. 4 is a diagram illustrating one example of a mobile terminal curved to enable at least one side of a display unit to have a radius of curvature;
FIG. 5 is a flowchart illustrating an operation of a mobile terminal according to an embodiment of the present invention;
FIG. 6 is a diagram illustrating one example of outputting a card to an edge part;
FIG. 7 is a diagram illustrating one example that a card displayed on an edge part is changed in response to a direction of a drag movement;
FIG. 8 is a diagram illustrating one example of setting the number of monthly installments;
FIG. 9 is a diagram illustrating one example of outputting a card matching a recommended card information to an edge part;
FIG. 10 is a diagram illustrating one example of outputting both a first card and a second card through an edge part;
FIG. 11 is a diagram illustrating one example of deleting a card displayed on an edge part;
FIG. 12 is a diagram illustrating one example of additionally outputting a card through an edge part;
FIG. 13 is a diagram illustrating one example of sending card information to a payment terminal;
FIG. 14 is a diagram illustrating one example of sending card information of a plurality of cards to a payment terminal;
FIG. 15 is a diagram illustrating one example of sending card information of a card selected by a pointer and card information of a card placed in a moving direction of the pointer with reference to the selected card to a payment terminal;
FIG. 16 is a diagram illustrating one example of sending a signature image to a payment terminal;
FIG. 17 is a diagram illustrating one example of sending a previously registered signature to a payment terminal;
FIG. 18 is a diagram illustrating one example of outputting transaction information to a front part;
FIGs. 19 and 20 are diagrams illustrating other examples of sending card information;
FIG. 21 is a diagram illustrating one example of outputting a feedback in accordance with validity of a fingerprint;
FIG. 22 is a diagram illustrating one example of sending payment information to a payment terminal through password verification;
FIG. 23 is a diagram illustrating one example of an operation of a mobile terminal in response to a drag movement location of a pointer;
FIG. 24 is a diagram illustrating one example of setting a remittance account and a remittance amount;
FIG. 25 is a diagram illustrating one example of doing an account transfer; and
FIG. 26 is a diagram illustrating one example of making a mobile payment.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized. Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

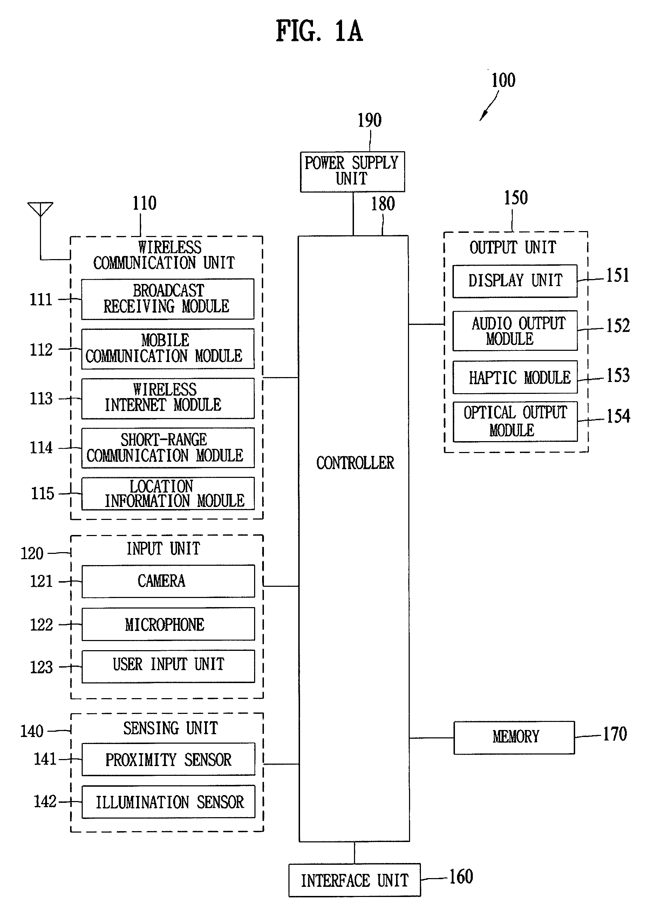

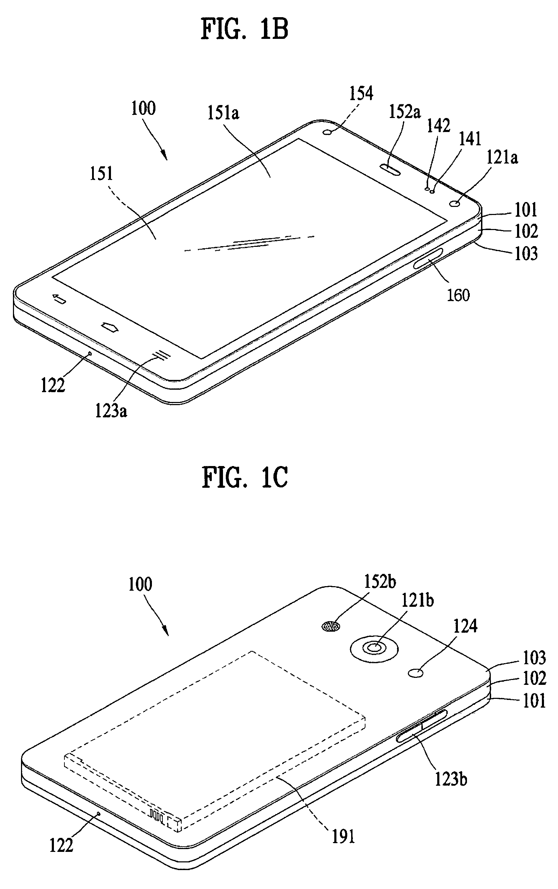

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies. Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen. The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like. If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information. In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like. The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen. The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition. The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging. The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces. The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output. The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds. The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown. The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

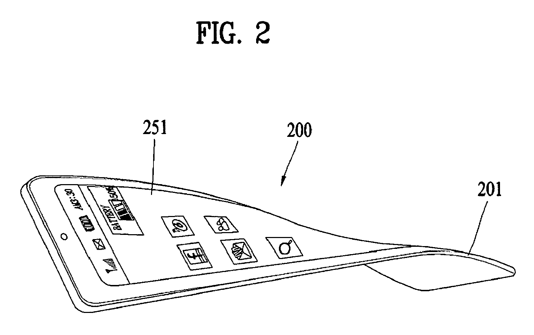

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C .

The flexible display of mobile terminal 200 is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 251 is not deformed (for example, in a state with an infinite radius of curvature and referred to as a first state), a display region of the flexible display unit 251 includes a generally flat surface. When the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states. One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251. A battery located in the mobile terminal 200 may also be deformable in cooperation with the flexible display unit 261, taking into account the characteristic of the flexible display unit 251. One technique to implement such a battery is to use a stack and folding method of stacking battery cells. The deformation of the flexible display unit 251 not limited to perform by an external force. For example, the flexible display unit 251 can be deformed into the second state from the first state by a user command, application command, or the like.

For clarity and convenience of the following description, assume that a mobile terminal according to an embodiment of the present invention includes at least one of the components shown in FIGs. 1A to 1C. In particular, assume that a mobile terminal according to embodiments of the present invention mention dint he following description may include the wireless communication unit 110, the camera 121, the sensing unit 140, the display unit 151, the memory 160, the controller 180 and the like. In some cases, assume that the mobile terminal 100 according to an embodiment of the present invention may further include a communication module configured for the communications between the mobile terminal and a payment terminal.

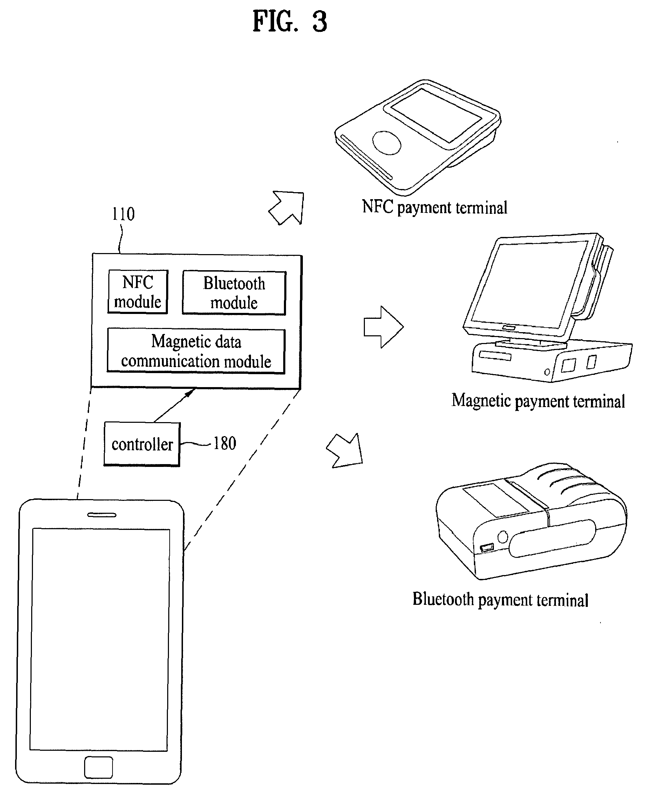

For instance, FIG. 3 is a diagram illustrating one example of the concept for a mobile terminal to communicate with a payment terminal. Referring to FIG. 3, the mobile terminal including the wireless communication unit 110 can communicate with at least one of an NFC payment terminal, a Bluetooth (e.g., BLE (Bluetooth Low Energy) terminal, etc.) payment terminal, and a magnetic payment terminal. In order to communicate with at least one of the NFC payment terminal, the Bluetooth payment terminal and the magnetic payment terminal, the mobile terminal may include at least one of an NFC module, a Bluetooth module and a magnetic communication module.

The NFC module is configured to communicate with the NFC payment terminal. For instance, as the NFC module of the mobile terminal is set to a card emulation mode and the NFC payment terminal is set to a reader mode, the NFC payment terminal can acquire card information registered at the mobile terminal from the NFC module of the mobile terminal. In another instance, both of the NFC module and the NFC payment terminal are set to P2P mode, thereby communicating with each other.

The Bluetooth module is configured to communicate with the Bluetooth payment terminal using Bluetooth technology. For instance, if the Bluetooth module of the mobile terminal receives a beacon signal from the Bluetooth payment terminal, the mobile terminal can be associated with the Bluetooth payment terminal based on the received beacon signal. Thereafter, the mobile terminal can send card information registered at the mobile terminal to the Bluetooth payment terminal through the Bluetooth module.

The magnetic communication module is configured to communicate with a payment terminal equipped with a magnetic reader. Namely, the magnetic communication module is configured to communicate with the magnetic payment terminal. If a card intended to be used is selected, the mobile terminal can broadcast card information of the selected card through the magnetic communication module. As the magnetic payment terminal listens to data broadcasted by the mobile terminal, a payment can proceed between the mobile terminal and the magnetic payment terminal.

The mobile terminal according to an embodiment of the present invention may include a biometric information recognition unit configured to receive a user's biometric information. For instance, the mobile terminal may include the camera 121 configured to recognize the user's iris or a fingerprint input unit configured to receive an input of a user's fingerprint. In this instance, the fingerprint input unit may configure a layered structure with a button (e.g., a home button exposed through a front side of the mobile terminal) provided to the mobile terminal or a layered structure with the displayed unit 151.

For instance, if a user input of pressing a home button is received, both the input of pressing the home button and the user's fingerprint can be received. In another instance, if a touch input of touching the display unit 151 is received, both of the input of touching the display unit 151 and the user's fingerprint can be received. In order to prevent unnecessary power consumption, the controller 180 can control the fingerprint input unit to be activated if the button configuring the layered structure with the fingerprint input unit is pushed or the display unit 151 is touched.

According to the embodiments mentioned in the following description, the display unit 151 may include a flexible touchscreen type. When the display unit 151 is embodied into a touchscreen configuration, the display unit 151 can play both a role as an output device configured to output information and a role as an input receive configured to receive a touch input. Moreover, the display unit 151 may be exposed through a front side of the mobile terminal in a manner that at least one side of the display unit 151 is curved to have a radius of curvature.

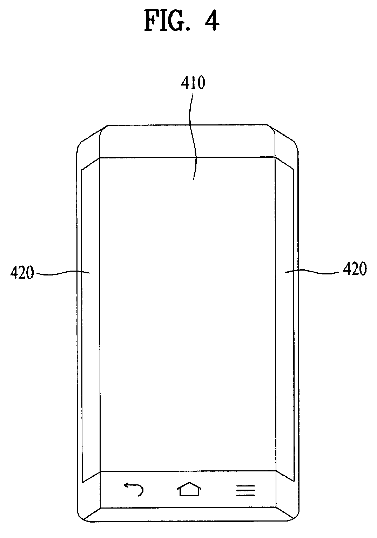

For instance, FIG. 4 is a diagram illustrating one example of a mobile terminal curved to enable at least one side of a display unit to have a radius of curvature. According to the example shown in FIG. 4, as a prescribed side of the display unit has a curved shape, the display unit is divided into a front part 410 exposed through a front side of the mobile terminal and an edge part 420 exposed through both lateral sides of the mobile terminal. The controller 180 can display information for a user through the front part 410 and the edge part 420.

In this instance, at least one of the front part 410 and the edge part 420 of the display unit may include a layered structure with the fingerprint input unit. For instance, when the edge part 420 and the fingerprint input unit configure the layered structure, and when a touch input of touching the edge part 420 is received, a user's fingerprint can be input as well. Although FIG. 4 shows one example that the edge part 420 of the display unit is formed on both of the lateral sides of the mobile terminal, the edge part 420 of the display unit may be formed on only one of the lateral sides.

One embodiment of the present invention discloses a method of making a payment using a card registered at a mobile terminal. In this instance, the card registered at the mobile terminal includes at least one of a credit card, a debit card, a point card (e.g., a mileage card), a membership card, a transportation card, and the like. Further, the controller 180 receives a mobile card issued by a card company server and can then register the received card. If information on a real card is input, the controller 180 can register the card based on the input information.

In order to use the registered card to make a payment, the controller 180 can save card information per card. In this instance, the card information may include at least one of a card number information, a card expiration date information (or a card validity term information), a card holder information, a CVC (card validation code) information, a signature information and the like. In addition, a plurality of cards may be registered at the mobile terminal. If a plurality of cards are registered at the mobile terminal, a user selects a card to use to make a payment and can then enable the payment to proceed through the selected card.

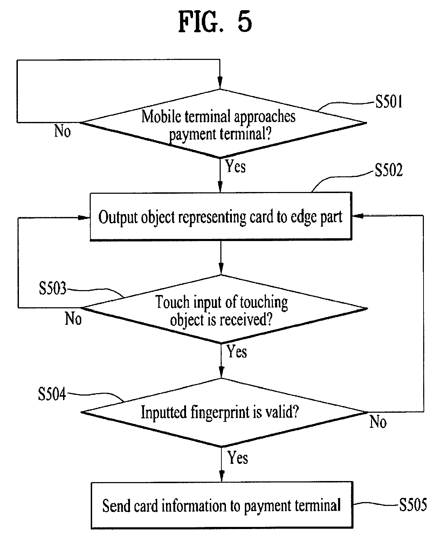

Based on the above description, a mobile terminal according to an embodiment of the present invention is described in detail as follows. In particular, FIG. 5 is a flowchart illustrating an operation of the mobile terminal 100 according to an embodiment of the present invention. Referring to FIG. 5, if the mobile terminal 100 approaches the payment terminal 200 (S501), the controller 180 can display a card, which will be used to make a payment, to the edge part of the display unit 151. Further, as the mobile terminal 100 approaches the payment terminal 200, if a feedback signal (e.g., a beacon signal broadcasted by the payment terminal 200) is received from the payment terminal 200, the controller 180 can recognize that the mobile terminal 100 has approached the payment terminal 200. In another instance, if a response signal is received from the payment terminal 200 in response to a signal sent to the payment terminal 200, the controller 180 can recognize that the mobile terminal 100 has approached the payment terminal 200.

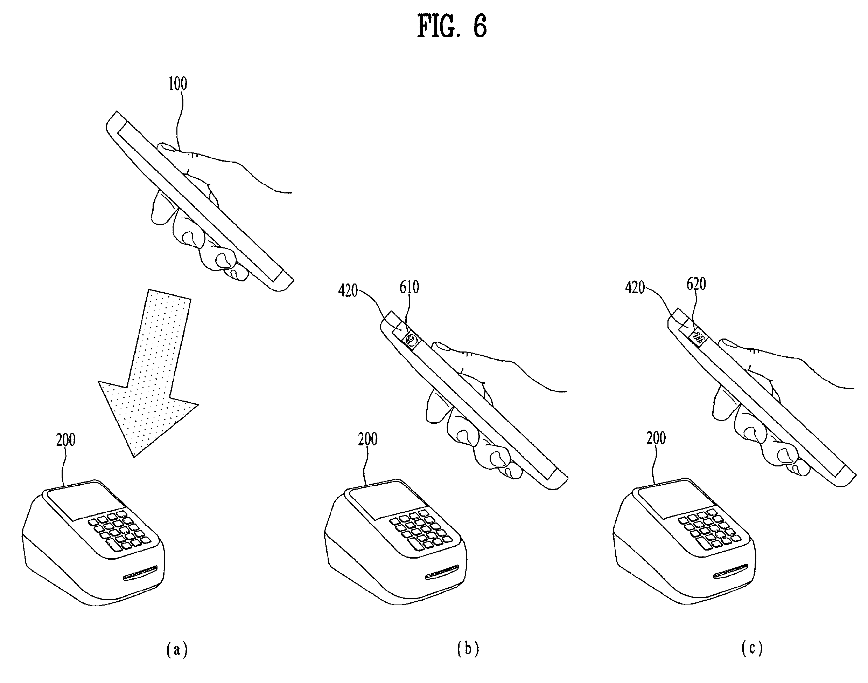

Displaying the card through the edge part corresponds to displaying an object such as a card logo, a card name, a card company information, a portion of a card number, a card image corresponding to an embodiment of a registered card, a card icon, or the like. For instance, FIG. 6 is a diagram illustrating one example of displaying a card to the edge part. Referring to FIG. 6 (a), if the mobile terminal 100 approaches the payment terminal 200, the controller 180 can display a card, which will be used to make a payment, on the edge part 420. Referring to FIG. 6 (b), a card log image 610 of the card to be used to make a payment is displayed on the edge part 420.

In addition, payment information related to the payment can be displayed on the front part. The payment information may include at least one of a franchise identification information, a purchase payment information and the like. The payment information can also be received from the payment terminal 200 as the mobile terminal 100 approaches the payment terminal 200.

While the card is displayed on the edge part 420, if a touch input of dragging a pointer currently touching the edge part 420 in a top/bottom or right/left direction is received, the controller 180 can change the card, which is to be used to make a payment, in response to the touch input. For instance, if a touch input of dragging a pointer currently touching the edge part 420 in the left direction is received, as shown in FIG. 6 (c), the controller 180 can display another card 620 through the edge part 410. In addition, if a touch input of dragging a pointer currently touching the edge part 420 in the top/bottom or right direction is received, the controller 180 can change the card displayed through the edge part 420.

Further, the controller 180 distinguishes when the pointer currently touching the edge part 420 is dragged to move in a top/bottom direction from when the pointer currently touching the edge part 420 is dragged to move in a left/right direction. If a touch input of dragging to move the pointer currently touching the edge part 420 in a first direction is received, the controller 180 can display a card of a type, which is different from a card currently displayed through the edge part 420, through the edge part 420. If a touch input of dragging to move the pointer currently touching the edge part 420 in a second direction is received, the controller 180 can display a card of the same type of a card currently displayed through the edge part 420 through the edge part 420.

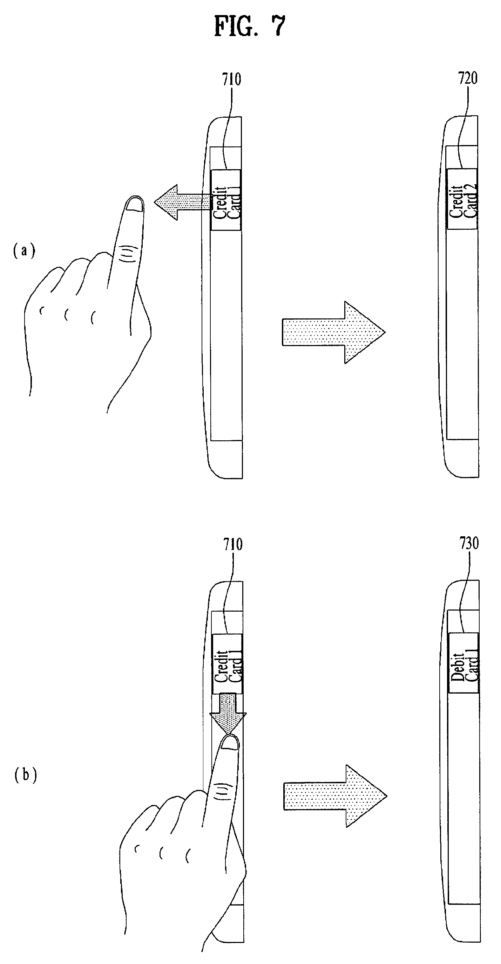

For instance, FIG. 7 is a diagram illustrating one example that a card displayed through the edge part is changed in response to a direction of a drag movement. Referring to FIG. 7, assume that a card of a credit card type is currently displayed on the edge part. While a card of a credit card type is currently displayed on the edge part, if a touch input of dragging to move a pointer currently touching the edge part in a left/right direction is received, the controller 180 can display a card, which is different from the card currently displayed on the edge part in a credit card category. For instance, referring to FIG. 7 (a), as the pointer currently touching the edge part is dragged to move in the left direction, the card displayed on the edge part is changed into Credit Card 2 720 from Credit Card 1 710.

While a card of a credit card type is currently displayed on the edge part, if a touch input of dragging to move a pointer currently touching the edge part in a top/bottom direction is received, the controller 180 can display a card, which has a category different from a credit category. For instance, referring to FIG. 7 (b), as the pointer currently touching the edge part is dragged to move in the top direction, the card displayed on the edge part is changed into Debit Card 1 730 from Credit Card 1 710.

The card type (or category) may be categorized into one of a credit card, a debit (or check) card, a point (or mileage) card, a membership card, a transportation card and the like, by which the present invention is non-limited. Further, a category of each of a plurality of cards registered at the mobile terminal 100 may be manually designated by a user.

Like the example shown in FIG. 7, in response to a drag moving direction of a pointer, the controller 180 can perform a card change within the same category or an inter-category card change. According to the example shown in FIG. 7, if a pointer (e.g., user's finger) is dragged to move in a right/left direction, the card change within the same category is performed. If a pointer is dragged to move in a top/bottom direction, the inter-category card change is performed. In another example, if a pointer is dragged to move in a top/bottom direction, the card change within the same category can be performed. If a pointer is dragged to move in a right/left direction, the inter-category card change can be performed.

When the display unit 151 includes the edge part provided to each of both lateral sides of the mobile terminal 100, a card can be displayed on one of the two edge parts or both of the edge parts. In another instance, the controller 180 can control the edge parts to display different cards, respectively. When the different cards are displayed on both of the edge parts, respectively, a user can select a currently output card through one of the two edge parts and then make a payment to proceed using the selected card. Alternatively, the user can make a payment to proceed using all the cards displayed on the two edge parts.

When attempting to make a payment to proceed using a card displayed on one of the two edge parts, the controller 180 can set the number of monthly installments based on an input of a touch to the other edge part. For instance, while a credit card is displayed on one of the two edge parts, if an input of a touch to the other edge part is received, the controller 180 can set the number of the monthly installments with the corresponding credit card based on the touch input input through the corresponding edge part.

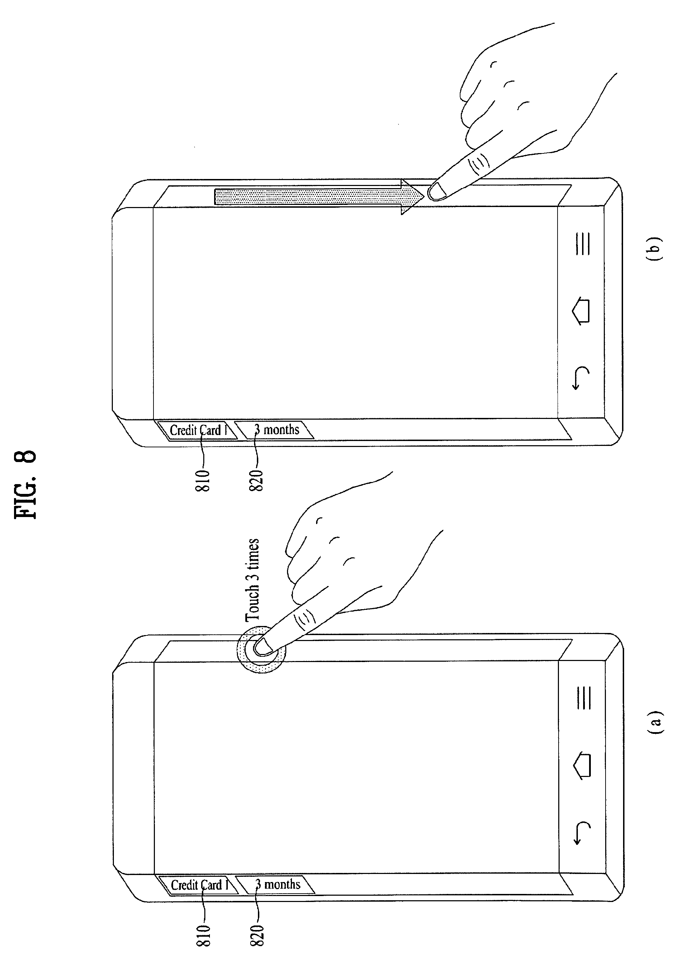

For instance, FIG. 8 is a diagram illustrating one example of setting the number of monthly installments. Referring to FIG. 8, while a credit card 810 is displayed on one of the two edge parts, if an input of a touch to the other is received, the controller 180 can set the number of the monthly installments based on the touch input. Further, the controller 180 can set the number of the monthly installments based on the number of taps at the corresponding edge part or a drag moving distance of a pointer currently touching the corresponding edge part.

Referring to FIG. 8 (a), while a credit card 810 is displayed on one edge part, if a touch input of tapping at the other 3 times is received, the controller 180 can set the number of the monthly installments to 3 months in response to the number of the taps. Referring to FIG. 8 (b), while a credit card 810 is displayed on one edge part, if a touch input of dragging to move a pointer currently touching the other is received, the controller 180 can set the number of the monthly installments based on the drag moving distance of the pointer. According to the example shown in FIG. 8 (b), the number of the monthly installments is set to 3 months in response to the drag input. If the drag moving distance of the pointer is longer, the number of the monthly installments can be incremented. If the drag moving distance of the pointer is shorter, the number of the monthly installments can be decremented.

The controller 180 can also display information 820 on the monthly installment number set on at least one of the two edge parts or the front part. According to the examples shown in FIG. 8 (a) and FIG. 8 (b), the information 820 on the monthly installment number is displayed on the edge part on which the card 810 is displayed. As the mobile terminal 100 approaches the payment terminal 200, when it is intended to display a card to the edge part, and if a plurality of cards are registered at the mobile terminal, the controller 180 can preferentially display information on the card having the most transactions or information on the card most recently used by a user on the edge part.

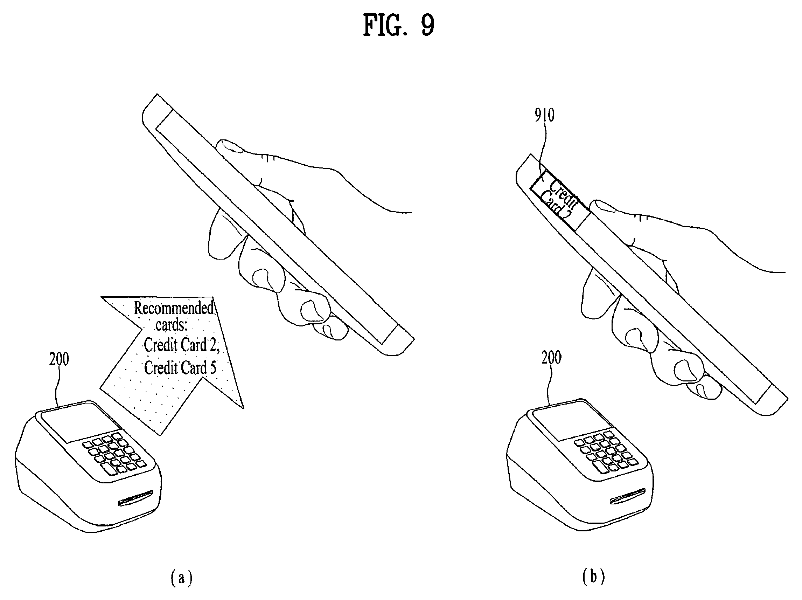

If the mobile terminal 100 receives recommended card information from the payment terminal 200, the controller 180 can preferentially display the card matching the recommended card information on the edge part. For instance, FIG. 9 is a diagram illustrating one example of displaying a card matching a recommended card information on an edge part.

Referring to FIG. 9, recommended card information on a credit card affiliated with a franchise, a card having a discount benefit on a payment, a point saving card (e.g., a loyalty card), a membership card and the like can be saved in the payment terminal 200. If the mobile terminal 100 approaches the payment terminal 200, as shown in FIG. 9 (a), the payment terminal 200 can send the information on the recommended card(s) to the mobile terminal 100. According to the example shown in FIG. 9 (a), Credit Card 2 and Credit Card 5 are designated as the recommended cards.

If the card matching the recommended card information from the payment terminal 200 is registered already, the controller 180 extracts the card matching the recommended card information and can then display the extracted card on the edge part. According to the example shown in FIG. 9 (b), Credit Card 2 910 is displayed on the edge part of the mobile terminal 100.

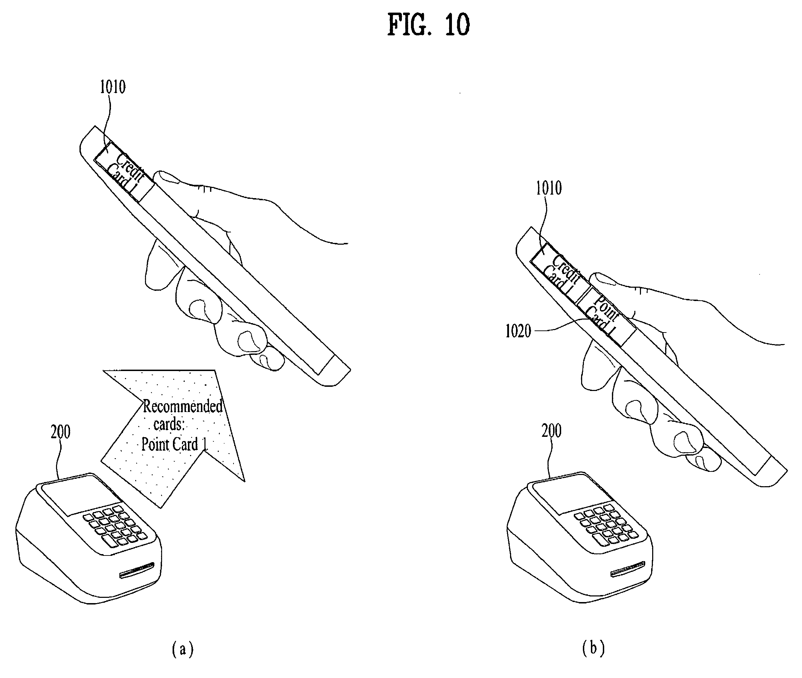

The controller 180 can display both a first card, which will be used to make a payment, and a second card, to which a membership discount is applicable. For instance, FIG. 10 is a diagram illustrating one example of displaying both a first card and a second card on an edge part. Referring to FIG. 10, if the mobile terminal 100 approaches the payment terminal 200, the controller 180 can display information on a card set to a default, information on a card having the most transactions, or information on a card most recently used by a user on the edge part. According to the example shown in FIG. 10 (a), Credit Card 1 101 is displayed on the edge part.

As the mobile terminal 100 approaches the payment terminal 200, if a recommended card information on a point card capable of providing a point accumulation benefit, a membership card capable of providing a membership discount benefit, or the like is received from the payment terminal 200, as shown in FIG. 10 (b), the controller 180 can display the point card or the membership card, which matches the recommended card information. According to the example shown in FIG. 10 (b), Point Card 1 1020 is additionally displayed on the edge part.

Referring to FIGs. 10 (a) and (b), a first card (i.e., Credit Card 1) and a second card (i.e., Point Card 1) are simultaneously displayed on one of two edge parts of the mobile terminal 100. Unlike the example shown in the drawing, the controller 180 can display the first card on one of the two edge parts and also display the second card to the other edge part. In addition, when a plurality of cards are displayed on the edge part, the arranged order of the cards can be manually adjusted by a user.

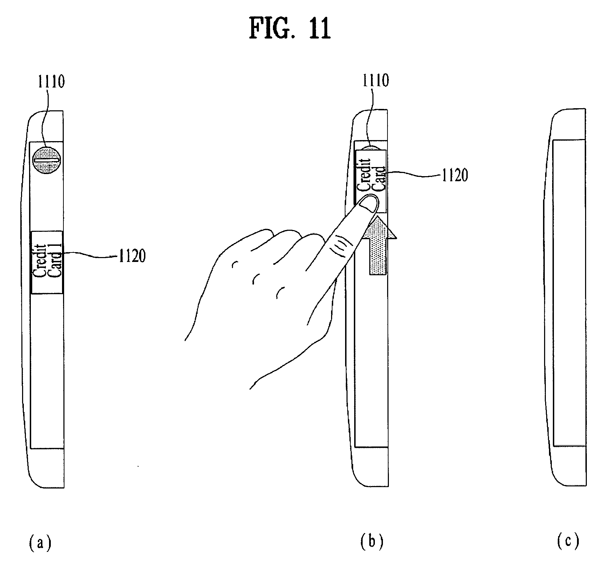

Further, the controller 180 can delete or add a card displayed on the edge part based on a touch input. For instance, FIG. 11 is a diagram illustrating one example of deleting a card displayed on the edge part. Referring to FIG. 11, while a card is displayed on the edge part, if a touch input of touching the card (e.g., a long touch input of long pressing the card, etc.) is received, the controller 180 can display a deletion region provided to delete the selected card (FIG. 11 (a)). According to the example shown in FIG. 11 (a), the deletion region is visually identified through a button '-' 1110. Thereafter, if a touch input of dragging & dropping the card 1120 to the deletion region is received (FIG. 11 (b)), the controller 180 can stop displaying the selected card on the edge part (FIG. 11 (c)).

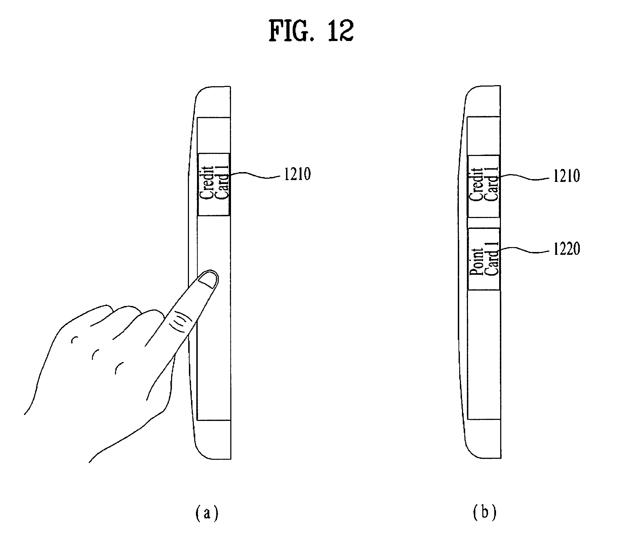

Next, FIG. 12 is a diagram illustrating one example of additionally displaying a card through the edge part. Referring to FIGs. 12 (a) and (b), while a card is displayed on the edge part, if a touch input of touching a vacant space through which the card is not displayed (e.g., a long touch input of long pressing a region through which the card is not displayed) is received, the controller 180 can display the card on the edge part. Further, the controller 180 can display a card of a type different from that of a previously displayed card on the edge part. According to the example shown in FIGs. 12 (a) and (b), as the touch input is received, Point Card 1 1220 of a type different from that of the previously output Credit Card 1 1210 is additionally displayed.

Referring again to FIG. 5, if a touch input of touching the card displayed on the edge part is received (S503), a fingerprint can be input through a fingerprint recognition sensor configuring the layered structure with the edge part. If the fingerprint input through the fingerprint recognition sensor matches a previously registered fingerprint (S504), the controller 180 can send card information used for a payment to the payment terminal 200 (S505). For instance, when the fingerprint input through the fingerprint recognition sensor matches a previously registered fingerprint, and if a touch input of dragging to move the pointer currently touching the card in a prescribed direction is received, the controller 180 can send the card information used for the payment to the payment terminal 200.

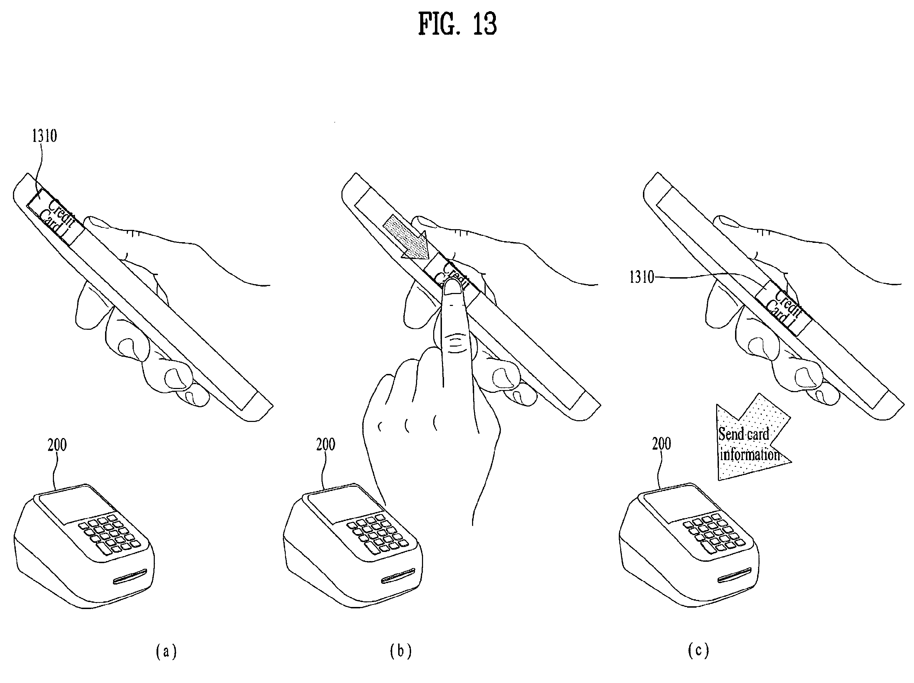

For instance, FIG. 13 is a diagram illustrating one example of sending the card information to the payment terminal 200. Referring to FIG. 13, if a pointer touches a card 1310 displayed on the edge part, a user's fingerprint can be input through the fingerprint recognition sensor configuring the layered structure with the edge part (FIG. 13 (a)). When the fingerprint input through the fingerprint recognition sensor matches a previously registered fingerprint, and if a touch input of dragging to move the pointer currently touching the card in a prescribed direction (e.g., a bottom direction of the edge part) is received (FIG. 13 (b)), the controller 180 can send the information of the selected card to the payment terminal 200 (FIG. 13 (c)).

In this instance, the card information sent to the payment terminal 200 may include a card number, a valid date, a CVC number and the like, which are used to make a payment. If the pointer currently touching the edge part is dragged to move over a prescribed distance or to a prescribed location on the edge part, the controller 180 can send the card information to the payment terminal 200. In order to indicate that the pointer has been dragged over the prescribed distance or to the prescribed location, the controller 180 can output a feedback when the corresponding condition is met.

For instance, if the pointer currently touching the edge part is dragged to move over a prescribed distance or to a prescribed location on the edge part, the controller 180 can output a vibration. In addition, while the controller 180 displays an image in a first color through the edge part, if a moving distance of the pointer increases or the pointer gets closer to the prescribed location, the controller 180 can display an image in a color closer to a second color. Therefore, through the feedback, a user can recognize that the payment information has been sent to the payment terminal 200.

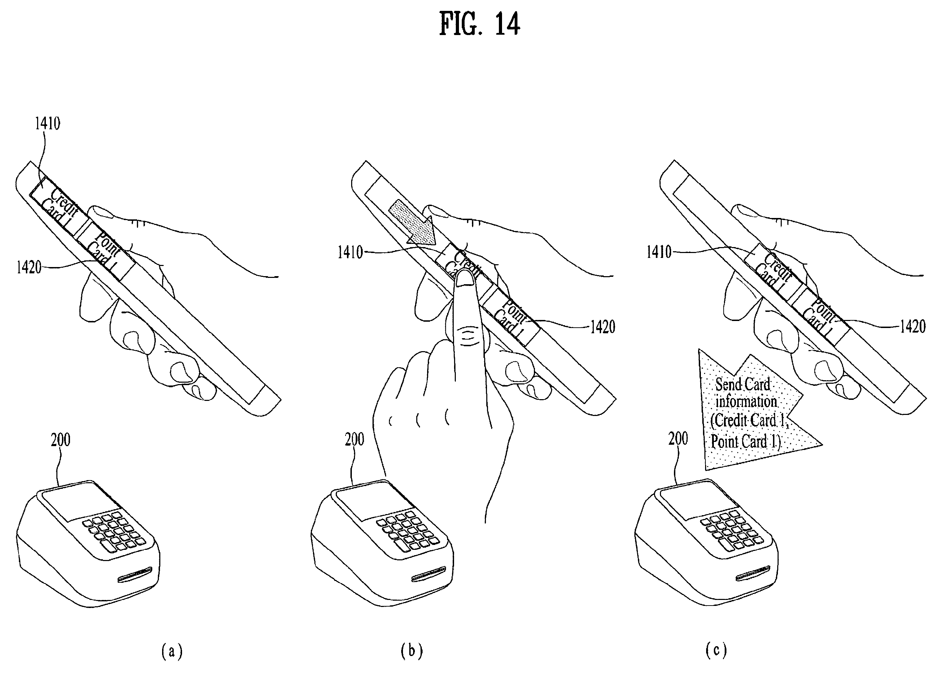

If a plurality of cards are currently displayed on the edge part, the controller 180 can send card information of the cards to the payment terminal 200. For instance, FIG. 14 is a diagram illustrating one example of sending card information of a plurality of cards to the payment terminal 200. Referring to FIG. 14, if a pointer touches one of a plurality of cards displayed on the edge part, a user's fingerprint can be input through the fingerprint recognition sensor configuring the layered structure with the edge part. When the input fingerprint matches a previously registered fingerprint, and if a touch input of dragging to move the pointer currently touching one of a plurality of the cards in a prescribed direction is received (FIG. 14 (b)), the controller 180 can send card information of a plurality of the cards, which are displayed on the edge part, to the payment terminal 200 (FIG. 14 (c)).

According to the example shown in FIG. 14 (c), card information of Credit Card 1 1410 and Point Card 1 1420, which are displayed on the edge part, are sent to the payment terminal 200. In this instance, the payment terminal 200 pays price of goods using Credit Card 1 and can save up points of the paid price of goods using Point Card 1. Unlike the above-described example, the controller 180 can send the card information of the card, which is selected by the user from a plurality of the cards, to the payment terminal 200. In another instance, the controller 180 can send only card information of a card selected from a plurality of cards by a pointer and card information of a card placed in a moving direction of the pointer with reference to the selected card to the payment terminal 200.

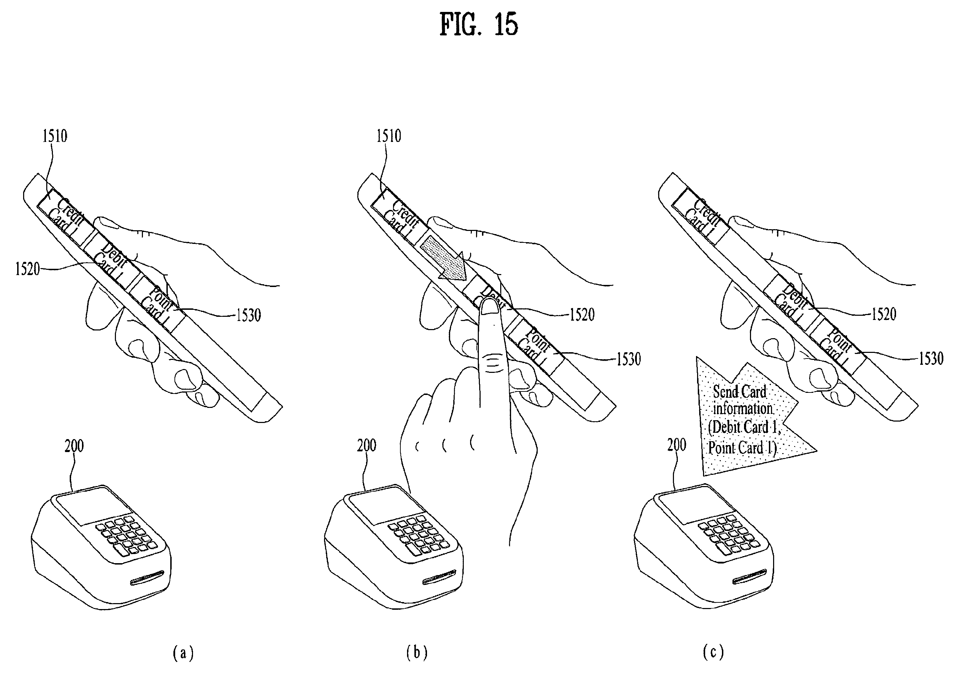

For instance, FIG. 15 is a diagram illustrating one example of sending card information of a card selected by a pointer and card information of a card placed in a moving direction of the pointer with reference to the selected card to the payment terminal 200. Referring to FIG. 15, Credit Card 1 1510, Debit Card 1 1520 and Point Card 1 1530 are sequentially displayed on the edge part.

While a touch input for touching Credit Card 1 1520 currently displayed on the edge part is received, if a touch input of dragging the pointer toward Point Card 1 1530 is received, the controller 180 can send the card information of the Debit Card 1 1520 selected by the pointer and the card information of the Point Card 1 1530 placed in a moving direction of the pointer with reference to the Debit Card 1 1520 to the payment terminal 200. Since the Credit Card 1 1510 is placed in a direction opposite to the moving direction of the pointer, the Credit Card 1 1510 can be excluded from the payment process.

If the card information is received from the mobile terminal 100, the payment terminal 200 can perform the payment process based on the received card information. In particular, the payment terminal 200 can send the received card information and the payment information (e.g., a franchise identification information, a purchase price information, etc.) to a card company server. If an approval information indicating a presence or non-presence of an approval is received from the card company server, the payment terminal 200 can send the approval information to the mobile terminal 100.

If the received approval information indicates a payment failure, the controller 180 can display a message indicating the payment failure to the front or lateral part. For example, if a use limit of the card is exceeded, the payment may result in failure, if a valid date of the card expires, the payment may result in failure, and if the card is reported as lost, the payment may result in failure.

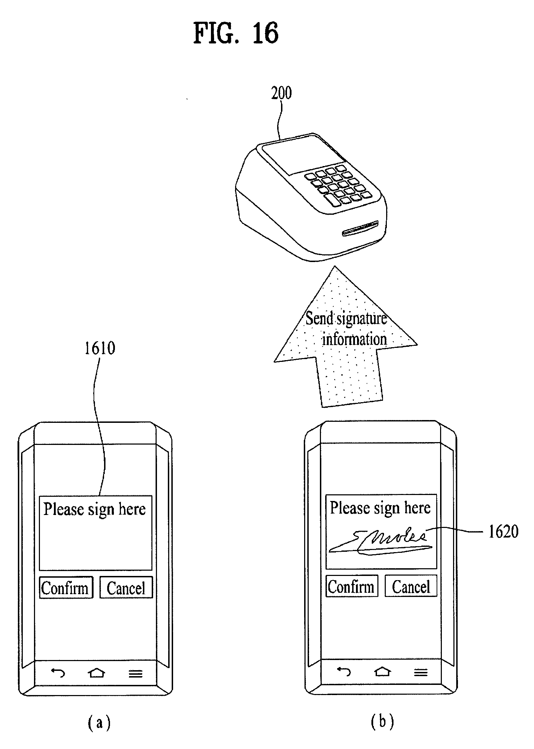

If the received approval information indicates that the payment is approved, the controller 180 can display a signature input box for a user's signature on the front part. If a corresponding signature is input through the signature input box, the mobile terminal 100 can send the input signature image to the payment terminal 200. For instance, FIG. 16 is a diagram illustrating one example of sending a signature image to the payment terminal 200.

Referring to FIG. 16, if an approval information indicates that a payment is approved, the controller 180 can display a signature input box 1610 on the front part (FIG. 16 (a)). If a signature is input through the signature input box 1610, the controller 180 can send the input signature 1620 input to the signature input box 1610 to the payment terminal 200.

If a signature is previously registered at the mobile terminal 100, the controller 180 can control the previously registered signature to be automatically input to the signature input box 1610. In another instance, the controller 180 can display a previously registered signature on the edge part. If a user input of dragging to move a pointer currently touching the previously registered signature in a prescribed direction is received, the controller 180 can send the previously registered signature to the payment terminal 200.

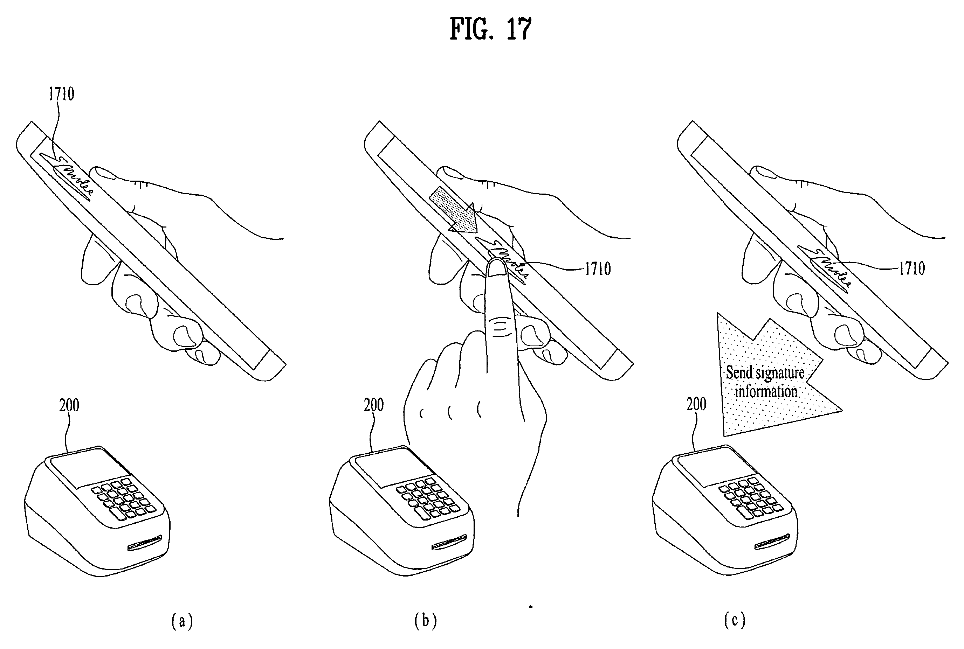

For instance, FIG. 17 is a diagram illustrating one example of sending a previously registered signature to the payment terminal 200. Referring to FIG. 17, if an approval information received from the payment terminal 200 indicates that a payment is approved, the controller 180 can display a previously registered signature 1710 on the edge part (FIG. 17 (a)).

Thereafter, if a touch input of dragging to move a pointer currently touching the signature 1710 in a prescribed direction is received (FIG. 17 (b)), the controller 180 can send the previously registered signature 1710 to the payment terminal 200 (FIG. 17 (c)). If a touch input (i.e., a long touch input) of touching a signature displayed on the edge part over a prescribed time is received, the controller 180 can display a signature input box on the front part to enable a user to input a new signature. If a signature is input through the signature input box, the controller 180 can send the signature input through the signature input box to the payment terminal 200 instead of the previously registered signature.

If a signature image is received, the payment terminal 200 can complete the payment using the received signature image. In particular, the payment terminal 200 can create a transaction receipt based on the received signature. If the payment is completed, the mobile terminal 100 can receive the transaction information from the payment terminal 200 or an external server (e.g., a card company server, etc.). In this instance, the transaction information may include pay information, a point accumulation information, a membership history information and the like. If the transaction information is received, the controller 180 can display the transaction information on the front part.

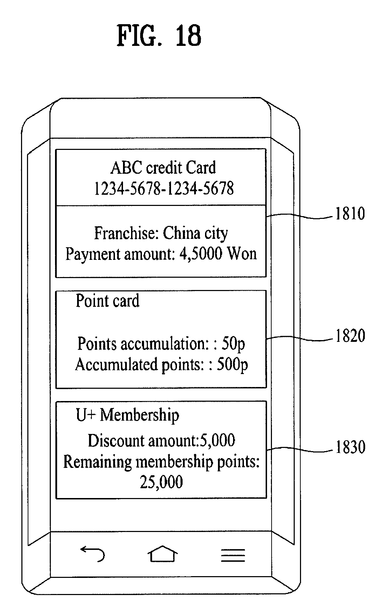

For instance, FIG. 18 is a diagram illustrating one example of displaying transaction information on the front part. Referring to FIG. 18, pay information 1810 using a credit card, point accumulation information 1820 using a point card and discount information 1830 using a membership card are displayed on the front part for example. The pay information 1810 may include card information used for the payment, franchise information, payment price information and the like. If a touch input of touching the pay information is received, the controller 180 can display a transaction receipt. The point accumulation information 1820 may include card information sued for point accumulation, a point accumulation amount, a cumulative point accumulation amount and the like. If a touch input of touching the point accumulation information is received, the controller 180 can display a detailed point accumulation history.

The discount information 1820 may include a membership card information used for discount, a discount amount, a deducted membership point information, a remaining membership point information and the like. If a touch input of touching the discount information is received, the controller 180 can output a detailed membership point use history.

According to the example shown in FIG. 13, in response to a touch input of dragging to move a pointer currently touching the edge part in a prescribed direction, the card information is sent to the payment terminal 200. However, the touch input for sending the card information is non-limited by the drag input. For example, in response to a touch input of touching a card displayed on the edge part plural times over a prescribed count, the card information can be sent to the payment terminal 200.

Moreover, according to the example shown in FIG. 13, by the touch input of touching the card displayed on the edge part, both of the card selection and the fingerprint input are simultaneously performed. In addition, when the fingerprint recognition sensor configures the layered structure with the front part or a physical button, only if the validity of the fingerprint input by a touch input of touching the front part or a touch input of touching the physical button is successful, the card information can be sent to the payment terminal 200.

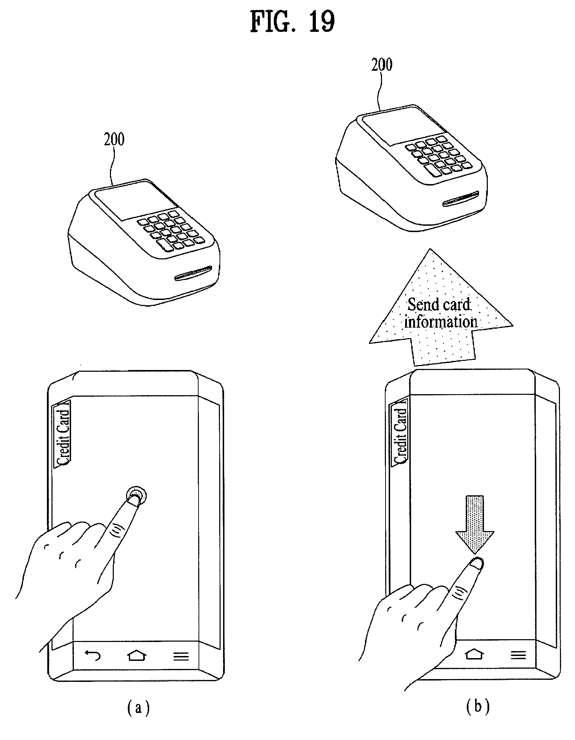

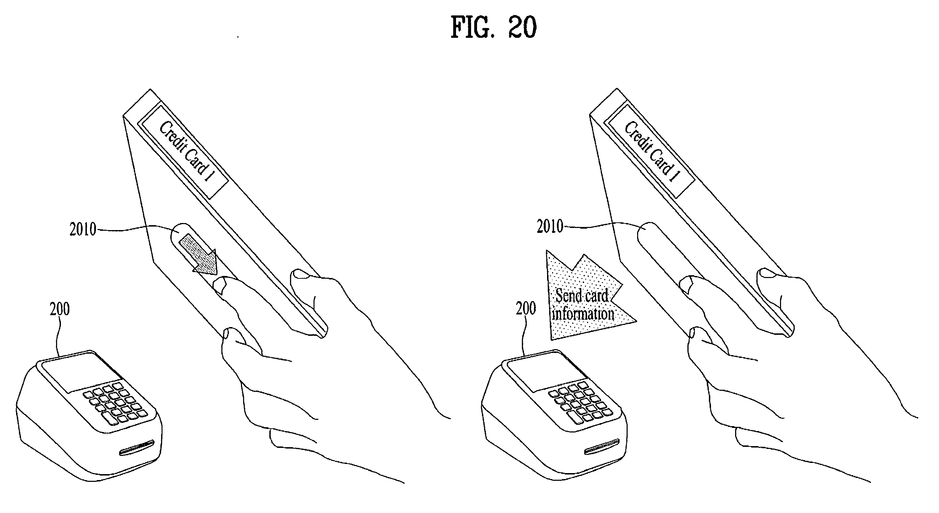

For instance, FIGs. 19 and 20 are diagrams illustrating other examples of sending card information. In particular, FIG. 19 is a diagram illustrating one example of sending a payment information to the payment terminal 200 if the front part configures the layered structure with the fingerprint recognition sensor. Referring to FIG. 19, if a pointer touches the front part, a user's fingerprint can be input through the fingerprint recognition sensor configuring the layered structure with the front part. If an input fingerprint matches a previously registered fingerprint and a touch input of dragging to move the pointer currently touching the front part in a prescribed direction is received (FIG. 19 (a)), the controller 180 can send card information to the payment terminal 200 (FIG. 19 (b)).

Unlike the example shown in FIG. 19, after the validity of the fingerprint input through the front part has been verified, if a touch input of dragging the pointer currently touching the card displayed on the edge part in a prescribed direction is received, the controller 180 can send the card information to the payment terminal 200.

FIG. 20 is a diagram illustrating one example of sending a payment information to the payment terminal 200 if a physical button located on a backside of the mobile terminal 100 configures the layered structure with the fingerprint recognition sensor. Referring to FIG. 20, if a pointer touches the physical button 2010 located on the backside, a user's fingerprint can be input through the fingerprint recognition sensor configuring the layered structure with the physical button 2010. If an input fingerprint matches a previously registered fingerprint and a touch input of dragging to move the pointer currently touching the physical button 2010 in a prescribed direction is received (FIG. 20 (a)), the controller 180 can send card information to the payment terminal 200 (FIG. 20 (b)).

Unlike the example shown in FIG. 20, after the validity of the fingerprint input through the physical button 2010 has been verified, and if a touch input of dragging the pointer currently touching the card displayed on the edge part in a prescribed direction is received, the controller 180 can send the card information to the payment terminal 200. If a fingerprint is input through the mobile terminal 100, the controller 180 can output a feedback depending on a presence or non-presence of the validity of the input fingerprint. In this instance, the feedback may include at least one of information displayed on the display unit 151, sound, vibration and the like.

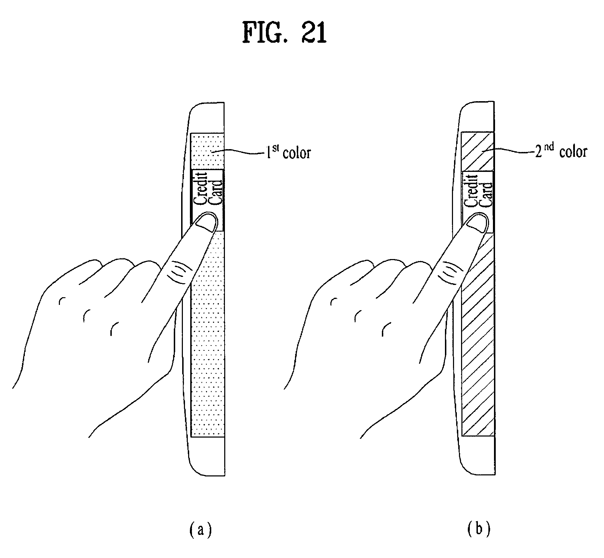

For instance, FIG. 21 is a diagram illustrating one example of outputting a feedback in accordance with validity of a fingerprint. Referring to FIG. 21 (a), after a fingerprint has been input through the mobile terminal 100, and if the input fingerprint is determined as valid, the controller 180 can display the edge part of the mobile terminal 100 in a first color. Further, referring to FIG. 21 (b), if the input fingerprint is determined as invalid, the controller 180 can display the edge part of the mobile terminal 100 in a second color.

In addition, the controller 180 can display a message, which indicates that the input fingerprint is not valid, on the front part. Through the finger's validity verification, an unauthorized third party can be prevented from making a payment. In addition to or on behalf of the fingerprint authentication, the controller 180 can send the payment information to the payment terminal 200 through the password verification.

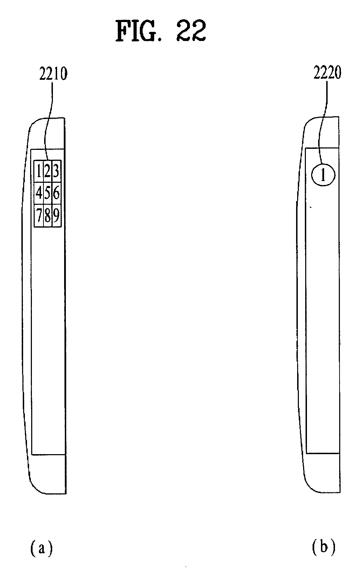

For instance, FIG. 22 is a diagram illustrating one example of sending payment information to the payment terminal 200 through password verification. Referring to FIG. 22 (a), if a touch input of dragging to move a pointer currently touching a card displayed on the edge part is received, the controller 180 can display a keypad 2210 for inputting a password on the edge part. According to the example shown in FIG. 22 (a), the keypad 2210 for inputting numerals 0 to 9 is displayed.

Referring to FIG. 22 (b), the controller 180 can display at least one of the numerals 0 to 9 on the edge part. If a touch input for simply touching the numeral 2220 is received, the corresponding numeral is handled as an input for a password. If a touch input of dragging to move a pointer currently touching in a prescribed direction is received, a numeral to be displayed on the edge part can be changed. After a password has been input through the touch input of touching the keypad or the keypad, and if the input password matches a previously registered password, the controller 180 can send card information to the payment terminal 200.

If an appropriate environment for approaching the mobile terminal 100 to the payment terminal 200 is provided, the payment can be made by the process described with reference to FIG. 5. In addition, if such an environment for approaching the mobile terminal 100 to the payment terminal 200 is not available (e.g., an environment that the payment terminal 200 fails to exist around a customer and that a clerk is accessible to the payment terminal 200 only), it may be difficult to make the payment.

To solve the above-mentioned problem, the mobile terminal 100 according to an embodiment of the present invention can display a card on the edge part even if the mobile terminal 100 fails to approach the payment terminal 200. For instance, when receiving a prescribed user input (e.g., a touch input of tapping at the edge part over a prescribed count, a touch input of touching the edge part over a prescribed time, etc.) through the edge part, the controller 180 can display a card on the edge part.

In addition, if a touch input of dragging to move a pointer currently touching the card displayed on the edge part is received, the controller 180 sets a state capable of sending card information. Thereafter, if the mobile terminal 100 approaches the payment terminal 200, the controller 180 can send the card information to the payment terminal 200. In this instance, the state capable of sending the card information may correspond to a state that the mobile terminal 100 is broadcasting the card information or a state that the mobile terminal 100 is sending the card information to a buffer. If the mobile terminal 100 and the payment terminal 200 approach each other, the controller 180 stops the broadcast of the card information or sends the buffered card information to the payment terminal after recognizing that the mobile terminal 100 has approached the payment terminal 200.

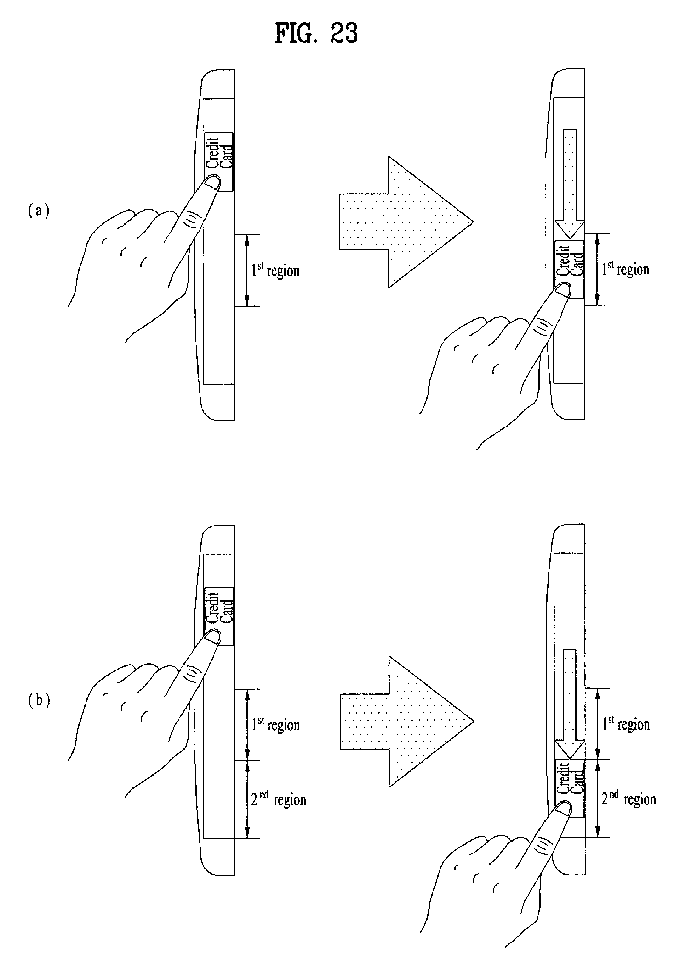

In another instance, in accordance with a drag moving distance of a pointer currently touching the edge part or a location to which a pointer currently touching the edge part has moved by being dragged, the controller 180 sends card information or controls a state capable of sending card information to be entered. For instance, FIG. 23 is a diagram illustrating one example of an operation of the mobile terminal 100 in response to a drag movement location of a pointer.

Referring to FIG. 23 (a), after a pointer currently touching a card displayed on the edge part has been dragged and moved in a prescribed direction, and if the touch is released from a first region, the controller 180 can send card information (or broadcasted). Further, referring FIG. 23 (b), after a pointer currently touching a card displayed on the edge part has been dragged and moved in a prescribed direction, and if the touch is released from a second region past the first region, the controller 180 can set a state capable of sending card information.

As the mobile terminal 100 enters the state capable of sending the card information, a user may hand the mobile terminal 100 to a clerk. If so, the clerk can proceed with the payment by tagging the mobile terminal 100 to the payment terminal 200.

The mobile terminal 100 according to an embodiment of the present invention has extendable applicability to mobile banking. For instance, once a remittance account and a remittance amount are set, the controller 180 displays an object that represents an account previously registered at the mobile terminal 100 through the edge part. In response to a touch input of dragging to move a pointer currently touching the object, the controller 180 can make a request for transferring the remittance amount from a user account to the remittance account to a bank server. One example of performing mobile banking through the mobile terminal 100 is described in detail with the accompanying drawings as follows.

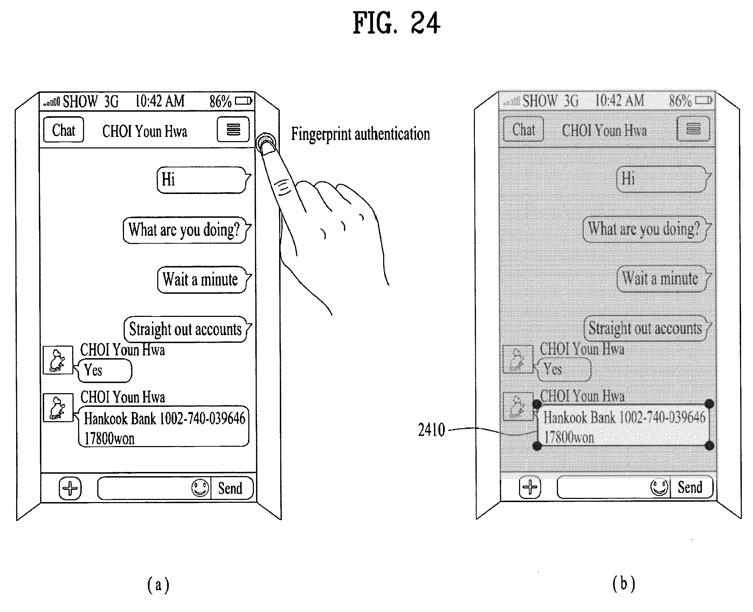

In particular, FIG. 24 is a diagram illustrating one example of setting a remittance account and a remittance amount. Through the front part of the mobile terminal 100, running screens of various applications such as a memo, a message and the like can be displayed on the front part of the mobile terminal 100. FIG. 24 (a) shows that an executing screen of a messenger application is displayed on the front part.

While an executing screen of an application is displayed, and if a touch input of touching the edge part is received or validity of a fingerprint input by touching the edge part is verified, the controller 180 can enter a selection mode for selecting at least one partial region on the executing screen displayed on the front part. In the selection mode, if a user selects at least one partial region on the running screen, the controller 180 extracts a text within a selected region 2410 and can then set a remittance account and a remittance amount from the extracted text.

For instance, FIG. 24 (b) shows that a message containing a bank name, an account number and an amount is included in the selected region 2410. The controller 180 can specify that a remittance account is 'Korea Bank 1002-740-039646' and that a remittance amount is 17,800 Won. Once the remittance account and the remittance amount are set, the controller 180 can output a withdrawal account information and a remittance account information to the front part. In addition, the controller 180 can display a prescribed object on the edge part. The object displayed on the edge part may include at least one of an image representing a bank, a bank name, an account name set by a user, and an icon. If a touch input of dragging to move a pointer currently touching the object in a prescribed direction is received, the controller 180 can make a request for an account transfer to a bank server in response to the touch input.

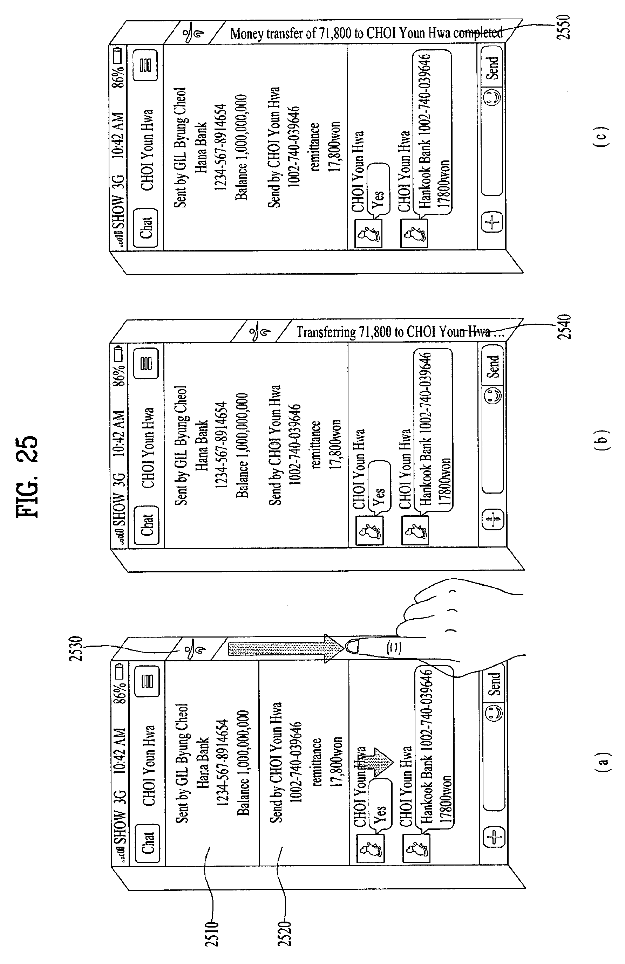

For instance, FIG. 25 is a diagram illustrating one example of performing an account transfer. Referring to FIG. 25 (a), once a remittance account and a remittance amount are set, the controller 180 can display withdrawal account information 2510 and remittance account information 2520. In this instance, the withdrawal account information 2510 may include the information on a user account previously registered at the mobile terminal 100 and the remittance account information may be set from a text extracted in selection mode. According to the example shown in FIG. 25 (a), the withdrawal account is 'Hana Bank' and the remittance account is 'Hankook Bank'.

In addition, the controller 180 can display an object 2530 on the edge part. According to the example shown in FIG. 25 (a), an icon is displayed on the edge part. If a pointer currently touching the object displayed on the edge part is dragged to move, the controller 180 can make a request for transferring a remittance amount to a remittance account from a withdrawal account to a bank server. Further, the controller 180 can display a message, which indicates that the money is being wired to the remittance account, on the front part or the edge part. According to the example shown in FIG. 25 (b), a message 2540 indicating that the wire transfer is in progress is displayed on the edge part.

Based on the request made by the mobile terminal 100, the bank server transfers the set remittance amount to the remittance account from the withdrawal account and can then send a corresponding result to the mobile terminal 100. If the information on the money transfer result is received from the bank server, the controller 180 can display a message, which indicates the money transfer result, on the front part or the edge part. According to the example shown in FIG. 25 (c), a message 25500 indicating that the money transfer is complete is displayed on the edge part.

While the money transfer is in progress, the controller 180 can display an image in a first color on the edge part. Thereafter, if the money transfer is successfully complete, the controller 180 can display an image in a second color on the edge part. Further, if the money transfer to the remittance account fails, the controller 180 can display an image in a third color. Hence, based on the color displayed on the edge part, a user can check a money transfer progress and a presence or non-presence of a success in the money transfer.

In addition, if a pointer currently touching an object is dragged to move, the object can be also dragged to move in accordance with the movement of the pointer. If the touch with the pointer is released from a prescribed location of the edge part, the controller 180 can gradually move the object toward an original location while proceeding with the money transfer. If the object enters the original location, the controller 180 can display a message indicating a result of the money transfer. Hence, a user can recognize a transfer progress level through a location of the object.

The mobile terminal 100 according to an embodiment of the present invention has extensible applicability to a mobile payment. For instance, while a goods purchase page (e.g., a webpage for paying price of goods, a running screen of an application for paying price of goods, etc.) is displayed on the front part, if a purchase button for a good purchase is selected, the controller 180 can display a card for paying price of goods on the edge part. If a touch input of dragging to move a pointer currently touching a card is received, the controller 180 can send card information for paying price of goods to a purchase server. One example of proceeding with a mobile payment through the mobile terminal 100 is described in detail with reference to the accompanying drawing as follows.

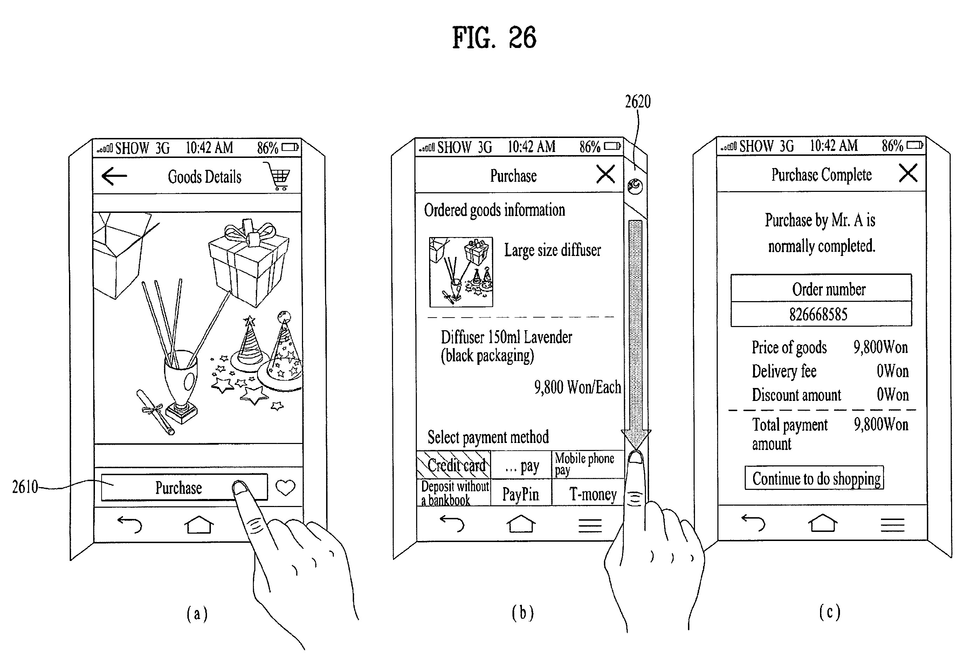

FIG. 26 is a diagram illustrating one example of making a mobile payment. Referring to FIG. 26 (a), a button (e.g., a purchase button 2610, etc.) for purchasing goods can be included in a goods purchase page displayed on the front part. Referring to FIG. 26 (b), if a touch input of touching the purchase button 2610 is received, the controller 180 can display a payment page for paying price of goods. In the payment page, information on goods to be purchased, a payment amount, and a menu for selecting a payment mechanism can be included.

If a credit card is selected as the payment mechanism, as shown in FIG. 26 (b), the controller 180 can display a card 2620 previously registered at the mobile terminal 100 on the edge part. Thereafter, if a touch input of dragging a pointer currently touching the card 2620 displayed on the edge part is received, the controller 180 can send information of the selected card to a purchase server.

The purchase server proceeds with a process for paying price of goods based on the received card information and may approve or decline the purchase through communications with a card company server. If a result of the purchase of goods is received from the purchase server, referring to FIG. 26 (c), the controller 180 can display a purchase complete page indicating that the purchase is completed.

Accordingly, embodiments of the present invention provide several advantages. For example, the user's convenience is enhanced when paying for items. In particular, a payment can be conveniently made using a card registered at the mobile terminal. Further, a security risk possibly generated from making a card payment is minimized through user authentication.

In addition, the above-described methods can be implemented in a program recorded medium as processor-readable codes. The processor-readable media may include all kinds of recording devices in which data readable by a processor are stored. The processor-readable media may include ROM, RAM, CD-ROM, magnetic tapes, floppy discs, optical data storage devices, and the like for example and also include carrier-wave type implementations (e.g., transmission via Internet).

The present invention encompasses various modifications to each of the examples and embodiments discussed herein. According to the invention, one or more features described above in one embodiment or example can be equally applied to another embodiment or example described above. The features of one or more embodiments or examples described above can be combined into each of the embodiments or examples described above. Any full or partial combination of one or more embodiment or examples of the invention is also part of the invention.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile terminal comprising:
a memory configured to store card information;
a wireless communication unit configured to communicate with a payment terminal;
a display having at least one side curved to be divided into a front part and an edge part; and
a controller configured to:
in response to the payment terminal being detected, display a first card object on the edge part of the display, and
transmit card information of a card associated with the first card object to the payment terminal in response to a touch input of the first card object.

2. The mobile terminal of claim 1, wherein the controller is further configured to display payment information on the front part of the display.

3. The mobile terminal of claim 1 or 2, wherein at least one of the front part and the edge part of the display configures a layered structure with a fingerprint recognition sensor.

4. The mobile terminal of claim 3, wherein in response to a valid fingerprint being input through the fingerprint recognition sensor, the controller is further configured to transmit the card information to the payment terminal.

5. The mobile terminal of claim 4, wherein in response to the valid fingerprint, the controller is further configured to output a feedback of a first type, and
wherein in response to an invalid fingerprint input, the controller is further configured to output a feedback of a second type.

6. The mobile terminal of any one of claims 1 to 5, wherein in response to the card information of a plurality of cards being stored in the memory, the first card object corresponds to one of a default card set, a most frequently used card and a most recently used card among the plurality of the cards stored in the memory.

7. The mobile terminal of any one of claims 1 to 6, wherein in response to recommended card information being received from the payment terminal, the controller is further configured to display the first card object that matches the recommended card information on the edge part.

8. The mobile terminal of any one of claims 1 to 7, wherein in response to a first drag input of dragging to move a pointer currently touching the first card object in a first direction, the controller is further configured to display a second card object classified into the same category of the first card object, and
wherein in response to a second drag input of dragging to move the pointer currently touching the first card object in a second direction is received, the controller is further configured to display a third card object classified into a category different from the first card object.

9. The mobile terminal of any one of claims 1 to 8, wherein in response to a result message for approving a payment using the card information being received from the payment terminal, the controller is further configured to display a signature input box for inputting a signature on the front part,
wherein the controller is further configured to transmit signature information input through the signature input box to the payment terminal.

10. The mobile terminal of any one of claims 1 to 9, wherein the controller is further configured to display a keypad for inputting a password on the edge part in response to the touch input, and
wherein in response to a valid password being input through the keypad, the controller is further configured to transmit the card information to the payment terminal.

11. The mobile terminal of any one of claims 1 to 10, wherein in response to a plurality of card objects being displayed on the edge part, the controller is further configured to transmit the card information of a plurality of cards respectively corresponding to the plurality of the card objects to the payment terminal in response to the touch input.

12. The mobile terminal of any one of claims 1 to 11, wherein the touch input comprises a drag input of dragging to move a pointer currently touching the first card object in a prescribed direction.

13. The mobile terminal of claim 12, wherein in response to the pointer being released from a first region on the edge part, the controller either broadcasts or buffers the card information.

14. The mobile terminal of any one of claims 1 to 13, wherein the first card object comprises at least one of a name of a card associated with the first card object, a logo, a card company name, a card number, a card image of imaging the card, and a card icon.

15. A method of controlling a mobile terminal, the method comprising:
storing, via a memory, card information;
communicating, via a wireless communication unit, with a payment terminal;
in response to the payment terminal being detected, display a first card object on an edge part of a display having at least one side curved to be divided into a front part and the edge part; and
transmitting, via the wireless communication unit, card information of a card associated with the first card object to the payment terminal in response to a touch input of the first card object.
